# EUROPEAN PATENT SPECIFICATION

(11) **EP 0 974 023 B1**
(45) Date of publication and mention of the grant of the patent: **13.08.2003**
(21) Application number: 98912601.6
(22) Date of filing: 20.03.1998
(51) Int. Cl.: F16L 37/14

(54) **Method of forming and mountin of tube connectors**
Herstell- und Montageverfahren einer Rohrkupplung
Méthode de fabrication et de montage de raccords à tube

(30) Priority: 20.03.1997 GB 9705775
(43) Date of publication of application: 26.01.2000
(73) Proprietor: Shalibane Engineering Ltd., Camberley, Surrey GU15 3DL (GB)
(72) Inventor: HALSALL, John, Anthony, Sidney, Henley-on-Thames Oxfordshire RG9 3DB (GB); SNARE, David, Michael, Ashford Middlesex TW15 1QW (GB)
(74) Representative: Wolff, Francis Paul
(86) International application number: GB9800852
(87) International publication number: WO98043011

(56) References cited:
- EP-A- 0 559 505
- EP-A- 0 743 479
- DE-A- 2 028 712
- US-A- 3 560 026

## Description

This invention relates to methods and processes of making the connectors. The connections are intended to be particularly useful in the automotive industry.

The tube connections within which this invention is concerned comprise a socket provided with an apertured wall, a spigot sealingly received within the socket, and a catch portion on the spigot accessible through the wall aperture of the socket, at least the inside of the socket and the outside of the spigot being provided with respective cooperating portions whereby to ensure that the spigot can only be inserted into the socket in a limited number, preferably one, of relative orientations, and retainer means engaging the catch portion of the spigot through the wall aperture of the socket. One of the spigot and socket, usually the spigot, is mounted on the end of a tube.

European Patent Application EP 0 743 479 discloses a self affixing and retaining pipe connector, suitable for use in an automobile cooling system, where a spigot on a metal tube is affixable in a sealed manner of predetermined axial angle to a socket attached to an end of a hose. The present invention seeks to improve thereover by providing a simpler method of attachment employing only a single spring clip and a device of such a construction that fabrication of the connector and of its parts is simple and straightforward.

Usually, a sealing ring is provided between the spigot and the socket to ensure a sealed connection, if the natural sealing properties of the respective materials are insufficient. The wall aperture of the socket is of course located outside the sealing region.

The socket, tube and spigot are all preferably substantially circular in cross section, with an exception of the cooperating portions. These may be provided by corresponding projections and recesses on or in the internal surface of the socket and external surface of the spigot, and may be asymmetrically located around the peripheries thereof or of different sizes.

The wall aperture in the socket may be a slot, and there are preferably a plurality of such apertures arranged around the socket, so that locking can take place at more than one circumferential location. A pair of parallel slots on opposite sides of the socket are preferred, in a plane substantially perpendicular to the axis of the connection.

The locking means may comprise a spring clip, especially a spring wire clip, having a leg retained in a slot in the socket wall, in engagement with the corresponding catch portion on the spigot.

The invention is particularly concerned with the spigot portion of the connection. The invention provides means in particular of forming a spigot tube connector for use in the tube connection described above, including the method of mounting such spigots sealingly on the end of a rigid tube.

The method or process comprises forming the spigot by stamping a blank from sheet material, preferably sheet steel, deep drawing the blank, and affixing it to a tube end by brazing, soldering, or welding, or by means of a suitable adhesive.

The advantages of the invention include ease of assembly for the tube connection, and economy of manufacture of the component connectors. The use of conventional hose clips is eliminated and the connection is quickly coupled or uncoupled with a spring clip. Positive orientation ensures that the tube can only be coupled to the socket in a proper orientation, which is important in many applications, for example automotive engineering, where angled tubes must be properly directed.

The invention will now be further described with reference to the accompanying illustrative drawings, which show non-limiting examples of the invention.

In the drawings:
Figure 1 is a cross-section through a tube connection made in accordance with the invention;
Figure 2 is a perspective view of the receiver incorporating a socket for receiving the tube in the connection shown in Figure 1;
Figure 3 is a perspective view of the spigot which is mounted on the tube and received in the socket;
Figures 4a to 4f show six consecutive stages in the manufacture of the spigot shown in Figure 3;
Figure 5 illustrates a transfer press on which the processes illustrated in Figures 4a to 4f are carried out;
Figure 6 is a perspective view of a deformed tube end prior to moulding thereon a spigot connector in accordance with a second embodiment of the invention, as illustrated in Figures 7 to 10;
Figure 7 is a longitudinal cross-section through the tube end fitted with the spigot;
Figure 8 is a front elevation of the spigot shown in Figure 7;
and Figures 9 and 10 are respectively plan and underneath views of the spigot.

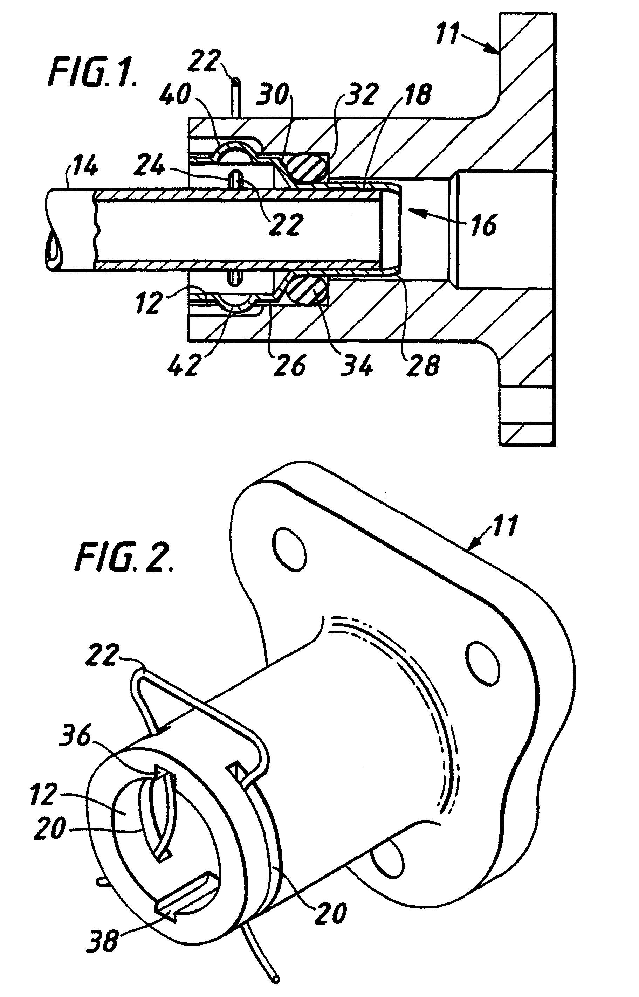

Referring to Figures 1 to 3, a receiver 11 which is intended to be bolted over an outlet to a container for water or the like in or on a car engine, for example, is provided with an integral socket 12. The receiver may be moulded from plastics material, or may be a metal casting. A steel tube 14 is connected into the receiver by means of a spigot 16 sealingly fastened over the tube end by brazing 18.

The tube, spigot and socket are all essentially circular in cross-section.

The socket portion of the receiver has two diametrically opposite partially circumferential slots 20 formed therein, and carries a spring wire retainer clip 22 which is approximately U-shaped, having two straight or slightly curved legs which each resiliently engage one of the slots 20.

The spigot 16 has corresponding opposite circumferential slots 24 whose edges act as catch portions for the legs of the retainer clip 22 extending chordally through the socket slots 20.

The spigot 16 is formed with a body portion 26 in which the catch slots 24 are formed, connected to a narrower nose portion 28 by an inclined shoulder 30. The socket 12 in receiver 11 is provided internally with a square shoulder 32, and a resilient sealing ring 34 is compressed between the respective shoulders in the assembled connection, as shown in Figure 1.

The inner surface of the socket is also provided with two diametrically opposite recesses, extending longitudinally into the interior of the socket from the open mouth thereof. These two recesses are a relatively deep and broad recess 36 and a relatively shallow and narrow recess 38. In the assembled connection, the recesses contain respectively a relatively high and broad lug 40 and a relatively low and narrow lug 42 formed on the outside of the spigot 16. The cooperating lugs and recesses serve not only to guide the spigot properly into the socket, and to prevent rotation once it is in the socket, but also to ensure that the spigot can only be inserted into the socket in one relative orientation.

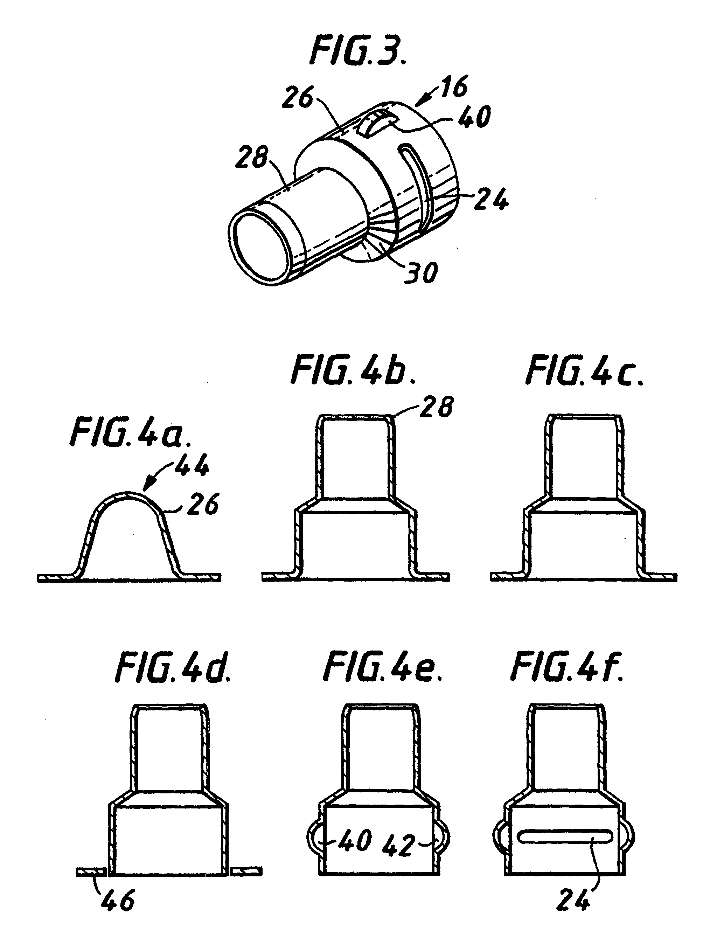

The successive illustrations in Figure 4 show the formation of the spigot from a sheet metal blank 44. In Figure 4a, the body 26 of the spigot is formed in a first drawing stage. Figure 4b shows the spigot nose 28, formed in a second drawing stage. Figure 4c shows the nose having been pierced at the bottom of the drawn cup. Figure 4d illustrates the removal of flange 46, which is a residual portion of blank 44 that is no longer required now that the drawing and nose piercing stages are complete. Figure 4e shows the two opposite lugs 40 and 42 having been formed, and Figure 4f illustrates the completion of the spigot formation after piercing the retaining slots 24.

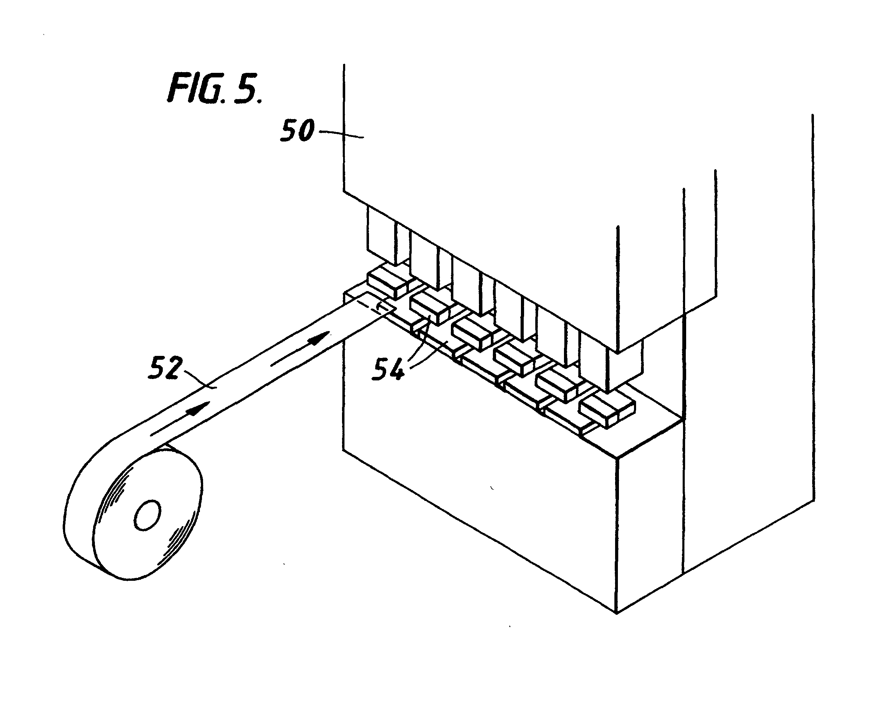

Figure 5 illustrates a transfer press 50 in which the operations described in relation to Figure 4 are carried out, the blanks 44 being obtained from a coil of sheet metal strip 52. The press has six separate stages, each with a separate tool corresponding to the six stages of Figure 4. When a blank has completed one stage it is moved to the next stage by pairs of fingers 54 that grip the workpiece, lift it and move it to the next station before returning to their park positions.

The tube end connector thus far described is formed from sheet metal.

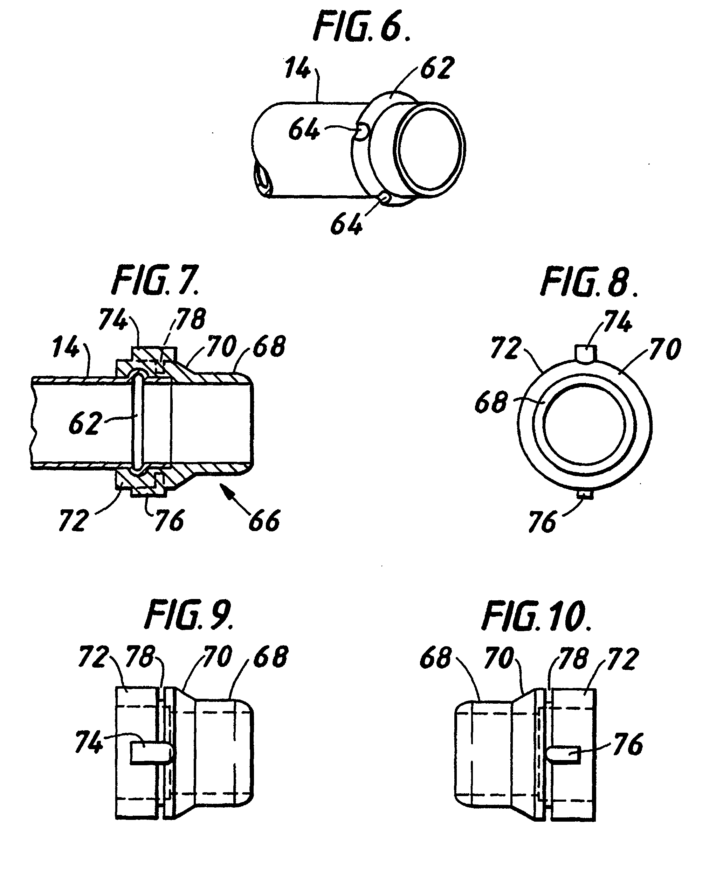

Figure 6 shows how the tube end may be deformed prior to the moulding operation. A circumferential bead is formed close to the tube end by running an appropriately shaped tool around the inner surface of the tube end while the outer part of the tube is supported in a die. This forms ridge 62, into which three equally circumferentially spaced indentations 64 are subsequently formed. This formation provides an anchorage point for the subsequently moulded spigot, preventing both longitudinal and rotational movement on the tube end.

The details of the spigot are shown in Figures 7 to 10, and it includes features corresponding to all the functional features of the sheet metal spigot 16, and is sealingly receivable in the same socket 20. of receiver 11.

Spigot 66 is formed in a mould in situ on the tube end with a nose portion 68 joined by an inclined shoulder 70 to a body portion 72 which overlies and engages the locating ridge 62 on the end of tube 14. The body is provided with two diametrically opposite lugs, these being a relatively high and broad lug 74 and a relatively low and narrow lug 76. A catch groove 78 around the body of the spigot 66 functions in the same manner as slots 20 in the sheet metal spigot 16 to engage the retaining legs of the wire spring clip 22 when the tube connection is made.

## Claims

1. A method of forming and mounting a spigot (16) for use in a tube connection, where: the tube connection comprises a socket (12) provided with an apertured wall; where the spigot (16) is sealingly receivable within the socket (12); where the spigot (16) comprises a catch portion (22,24), accessible through the wall aperture (22) of the socket (12) when the spigot (16) is in the socket (12); where at least the inside of the socket (12) and the outside of the spigot (16) are provided with respective cooperating portions (36,40,38,42) co-operative, when the spigot (16) is inserted into the socket (12), to ensure that the spigot (16) can only be inserted into the socket (12) in a limited number of relative orientations; where retainer means (22) is operative, when the spigot (16) is in the socket (12), to engage the catch portion (22) of the spigot (16) through the wall aperture of the socket (12); and where one of the spigot (16) and socket (12) is sealingly mounted on an end of a tube (14); said method of forming and mounting said spigot (16) being **characterised by** comprising the steps of: stamping a blank (26) from sheet metal (52); deep drawing the blank (26) to form a cup (28) having a nose; piercing the nose; forming said cooperating portion (40,42) on the outside of the cup (28) wall; completing the spigot (16) by forming said catch portion (24) on the cup (28); and sealingly mounting the spigot (16) on to a rigid tube (14) end.

2. A method according to claim 1 wherein said step of forming said catch portion (24) comprises the step of piercing a slot (24)in said cup (28) wall.

3. A method according to claim 1 or claim 2 comprising the steps of: forming an external ridge (62) on the rigid tube (14) end, preferably by outwardly deforming a circumferential portion of the tube (14), said external ridge (62) constituting an anchorage point for said spigot (16); and moulding said spigot (16) sealingly in position on said rigid tube end (14).

4. A method, according to claim 3, wherein said external ridge (62) is formed on a round tube end (14) by forming a circular ridge (62) around said tube end (14), and providing indentations (64) in said circular ridge (62).

5. A method, according to any one of the preceding claims, including the steps of: providing an external shoulder (30) on said spigot (16) to co-operate with an internal shoulder (32) on said socket (16); and providing a sealing ring (34) for compression, when said spigot (16) is inserted into said socket (12), between said external shoulder (30) of said spigot and said internal shoulder (32) of said socket (16).

6. A method, according to any one of the preceding claims, including the step of providing said cooperating portions (36,40,38,42) on said outside of said spigot (16) by providing a corresponding projection (40,42) or recess (36,38) on or in the external surface of said spigot (16) to match with a corresponding recess or projection on the internal surface of said socket (12).

7. A method, according to claim 6, including the steps of: providing said cooperating portions (36, 38, 40, 42) on said external surface of said spigot (16) in the form of at least two corresponding projections (40,42) and recesses (36,38) on or in the external surface of said spigot (16) to match with corresponding recesses (36,38) or projections (40,42) on the internal surface of the socket (12); and ensuring that said spigot (16) can only be inserted into the socket (12) in one relative orientation by asymmetrically locating said at least two corresponding projections (40,42) and recesses (36,38) around the peripheries of said spigot (16); or by providing said at least two corresponding projections (40,42) and recesses (36,38) on or in said external surface of said spigot (16) of different sizes.

8. A method, according to any one of the preceding claims, including the step of providing a corresponding catch portion (22) on the spigot (16) for engaging a spring clip (22) in said retainer means, said spring clip, for preference, being a spring wire clip (22), having a leg retained in a circumferentially extending slot (20) in the socket wall.

9. A method, according to any one of the preceding claims, including the step of sealingly affixing said spigot (16) to said tube (14) end by brazing (18), soldering, welding, or by means of an adhesive.

## Patentansprüche

1. Ein Verfahren zum Herstellen und zum Montieren eines Verbindungselementes (16) zur Verwendung für eine Rohrverbindung, wobei: die Rohrverbindung eine Buchse (12) enthält, die mit einer eine Öffnung aufweisenden Wand versehen ist; wobei das Verbindungselement (16) in der Buchse (12) aufnehmbar ist; wobei das Verbindungselement (16) ein Verriegelungsteil (22, 24) enthält, das durch die Wandöffnung (20) der Buchse (12) zugänglich ist, wenn das Verbindungselement (16) sich in der Buchse (12) befindet; wobei mindestens die Innenseite der Buchse (12) und die Außenseite des Verbindungselementes (16) mit jeweils zusammenwirkenden Elementen (36, 40, 38, 42) versehen sind, die miteinander zusammenwirken, wenn das Verbindungselement (16) in die Buchse (12) eingesetzt ist, um sicherzustellen, daß das Verbindungselement (16) in die Buchse (12) nur in einer begrenzten Anzahl von zueinander relativen Ausrichtungen eingesetzt werden kann; wobei eine Halteeinrichtung (22) wirksam ist, wenn das Verbindungselement (16) sich in der Buchse (12) befindet, um mit dem Verriegelungsteil (24) des Verbindungselementes (16) durch die Wandöffnung der Buchse (12) in Eingriff zu kommen; und wobei je ein Verbindungselement (16) und eine Buchse (12) abdichtend an einem Ende eines Rohres (14) montiert wird, wobei dieses Verfahren zum Herstellen und zum Montieren dieses Verbindungselementes (16) **dadurch gekennzeichnet ist, daß** es die folgenden Schritte enthält: Ausstanzen eines Rohlings (26) aus einem Blech (52); Tiefziehen des Rohlings (26) zur Bildung einer einen Ansatz aulweisenden Tasse (28); Durchstechen des Ansatzes; Bildung dieser zusammenwirkenden Teile (40, 42) an der Außenseite der Wand der Tasse (28); Fertigstellen des Verbindungselementes (16) durch Formung dieses Verriegelungsteiles (24) an der Tasse (28); und abdichtendes Montieren des Verbindungselementes (16) an einem starren

2. Ein Verfahren nach Anspruch 1, bei dem dieser Schritt des Formens dieses Verriegelungsteiles (24) den Schritt des Durchstechens eines Schlitzes (24) in der Wand der Tasse (28) umfaßt.

3. Ein Verfahren nach Anspruch 1 oder 2, enthaltend die Schritte: Anbringen einer Außenrippe (62) an dem starren Rohrende (14), vorzugsweise durch nach außen gerichtetes Verformen eines Umfangsabschnittes des Rohres (14), wobei diese Außenrippe (62) einen Verankerungspunkt für dieses Verbindungselement (16) bildet; und abdichtendes Anformen dieses Verbindungselementes (16) in Position an diesem starren Rohrende (14).

4. Ein Verfahren nach Anspruch 3, bei dem diese Außenrippe (62) an einem runden Rohrende (14) angebracht wird, indem man eine Kreisrippe (62) um dieses Rohrende (14) formt, und wobei man in dieser Kreisrippe (62) Einschnitte (64) anbringt.

5. Ein Verfahren nach einem der vorhergehenden Ansprüche, umfassend die Schritte: Anbringen einer äußeren Schulter (30) an diesem Verbindungselement (16) zum Zusammenwirken mit einer inneren Schulter (32) an dieser Buchse (12); und Anbringen eines Dichtungsringes (34), der, wenn dieses Verbindungselement (16) in diese Buchse (12) eingesetzt ist, durch Zusammendrücken zwischen dieser äußeren Schulter (30) dieses Verbindungselementes und dieser inneren Schulter (32) dieser Buchse (12) wirksam wird.

6. Ein Verfahren nach einem der vorhergehenden Ansprüche, enthaltend den Schritt des Anbringens der zusammenwirkenden Teile (36, 40, 38, 42) an der Außenseite dieses Verbindungselementes (16) durch Anbringen eines entsprechenden Vorsprunges (40, 42) oder einer Aussparung (36, 38) an oder in der Außenfläche dieses Verbindungselementes (16), um mit einer entsprechenden Aussparung oder einem entsprechenden Vorsprung an der Innenfläche dieser Buchse (12) zusammenzupassen.

7. Ein Verfahren nach Anspruch 6, enthaltend die Schritte: Anbringen dieser zusammenwirkenden Teile (36, 38, 40, 42) an dieser Außenfläche dieses Verbindungselementes (16) in der Form von mindestens zwei entsprechenden Vorsprüngen (40, 42) und Aussparungen (36, 38) an oder in der Außenfläche dieses Verbindungselementes (16), um mit entsprechenden Aussparungen (36, 38) oder Vorsprüngen (40, 42) an der Innenfläche der Buchse (12) zusammenzupassen; und Sicherstellen, daß dieses Verbindungselement (16) in die Buchse (12) nur in einer Relativausrichtung eingesetzt werden kann, indem man mindestens zwei entsprechende Vorsprünge (40, 42) bzw. Aussparungen (36, 38) asymmetrisch um den Umfang dieses Verbindungselementes (16) positioniert; oder indem man mindestens zwei entsprechende Vorsprünge (40, 42) und Aussparungen (36, 38) unterschiedlicher Größen an oder in dieser Außenfläche dieses Verbindungselementes (16) anbringt.

8. Ein Verfahren nach einem der vorhergehenden Ansprüche, enthaltend den Schritt des Anbringens einer entsprechenden Halteeinrichtung (22) an dem Verbindungselement (16) für den Eingriff eines Federclips (22) in dieser Halteeinrichtung, wobei dieser Federclip vorzugsweise ein Federdrahtclip (22) ist, der einen Schenkel hat, der in einem sich in Umfangsrichtung erstreckenden Schlitz (20) in der Buchsenwand festgehalten wird.

9. Ein Verfahren nach einem der vorhergehenden Ansprüche, enthaltend den Schritt des abdichtenden Anbringens dieses Verbindungselementes (16) an diesem Rohrende (14) durch Hartverlöten (18), Verlöten, Verschweißen oder mittels eines Klebemittels.

## Revendications

1. Procédé de formage et de montage d'un manchon (16) aux fins d'utilisation dans une jonction à tube, où : la jonction à tube comprend une douille (12) munie d'une paroi à trous ; où le manchon (16) peut être reçu de manière étanche à l'intérieur de la douille (12) ; où le manchon (16) comprend une portion de verrouillage (22, 24), accessible à travers l'ouverture de paroi (20) de la douille (12) quand le manchon (16) est dans la douille (12) ; où au moins l'intérieur de la douille (12) et l'extérieur du manchon (16) sont munis de portions concourantes respectives (36, 40, 38, 42) coopérant quand le manchon (16) est inséré dans la douille (12) pour garantir que le manchon (16) peut uniquement être inséré dans la douille (12) dans un nombre limité d'orientations relatives ; où un moyen de retenue (22) est actif, quand le manchon (16) est dans la douille (12), pour mettre en prise la portion de verrouillage (24) du manchon (16) à travers l'ouverture de paroi de la douille (12) et où le manchon (16) ou la douille (12) est monté de manière étanche sur une extrémité d'un tube (14) ; ledit procédé de fabrication et de montage dudit manchon (16) étant **caractérisé par le fait qu'**il comprend les étapes qui consistent à : estamper un flan (26) à partir d'une tôle (52) ; emboutir profondément le flan (26) pour former un godet (28) ayant un nez ; percer le nez ; former ladite portion concourante (40, 42) sur l'extérieur de la paroi du godet (28) ; compléter le manchon (16) en formant ladite portion de verrouillage (24) sur le godet (28) et en montant de manière étanche le manchon (16) sur une extrémité du tube rigide (14).

2. Procédé selon la revendication 1 dans lequel ladite étape de formage de ladite portion de verrouillage (24) comprend l'étape qui consiste à percer une fente (24) dans ladite paroi du godet (28).

3. Procédé selon la revendication 1 ou la revendication 2 comprenant les étapes qui consistent à : former une arête extérieure (62) sur l'extrémité du tube rigide (14), de préférence en déformant extérieurement une portion circonférentielle du tube (14), ladite arête extérieure (62) constituant un point d'ancrage dudit manchon (16); et à mouler ledit manchon (16) de manière étanche en position sur ladite extrémité du tube rigide (14).

4. Procédé selon la revendication 3, dans lequel ladite arête extérieure (62) est formée sur une extrémité du tube rond (14) en formant une arête circulaire (62) autour de ladite extrémité de tube (14) et en ménageant des entailles (64) dans ladite arête circulaire (62).

5. Procédé selon l'une quelconque des revendications précédentes, comportant les étapes qui consistent à : ménager un épaulement extérieur (30) sur ledit manchon (16) pour coopérer avec un épaulement intérieur (32) sur ladite douille (12); et fournir une bague d'étanchéité (34) aux fins de compression, quand ledit manchon (16) est inséré dans ladite douille (12), entre ledit épaulement extérieur (30) dudit manchon et ledit épaulement intérieur (32) de ladite douille (12).

6. Procédé selon l'une quelconque des revendications précédentes, comportant l'étape qui consiste à ménager lesdites portions concourantes (36, 38, 40, 42) sur ledit extérieur dudit manchon (16) en ménageant une saillie correspondante (40, 42) ou un évidement correspondant (36, 38) sur ou dans la surface extérieure dudit manchon (16) pour s'adapter avec un évidement correspondant ou une saillie correspondante sur la surface intérieure de ladite douille (12).

7. Procédé selon la revendication 6 comportant les étapes qui consistent à ménager lesdites portions concourantes (36, 38, 40, 42) sur ladite surface extérieure dudit manchon (16) sous la forme d'au moins deux saillies correspondantes (40, 42) et évidements correspondants (36, 38) sur ou dans la surface extérieure dudit manchon (16) pour s'adapter avec des évidements correspondants (36, 38) ou des saillies correspondantes (40, 42) sur la surface intérieure de la douille (12); et à garantir que ledit manchon (16) peut seulement être inséré dans la douille (12) dans une orientation relative en plaçant de manière asymétrique lesdites au moins deux saillies correspondantes (40, 42) et lesdits au moins deux évidements correspondants (36, 38) autour des périphéries dudit manchon (16) ou en réalisant lesdites au moins deux saillies correspondantes (40, 42) et lesdits au moins deux évidements correspondants (36, 38) sur ou dans ladite surface extérieure dudit manchon (16) avec des dimensions différentes.

8. Procédé selon l'une quelconque des revendications précédentes, comportant l'étape qui consiste à ménager une portion de verrouillage correspondante (24) sur le manchon (16) pour mettre en prise une bride (22) dans ledit moyen de retenue, ladite bride étant de préférence une bride en fil métallique (22), ayant une branche retenue dans une fente s'étendant circonférentiellement (20) dans la paroi de la douille.

9. Procédé selon l'une quelconque des revendications précédentes, comportant l'étape qui consiste à appliquer de manière étanche ledit manchon (16) sur ladite extrémité du tube (14) par brasage fort (18), brasage tendre, soudage ou au moyen d'un adhésif.
